# EUROPEAN PATENT SPECIFICATION

(11) **EP 4 124 581 B1**
(45) Date of publication and mention of the grant of the patent: **19.07.2023**
(21) Application number: 21382684.5
(22) Date of filing: 26.07.2021
(51) Int. Cl.: B65B 43/46, B65B 7/16, B65G 25/02, B65B 43/52, B65B 35/36, B65B 59/00

(54) **TRAY SEALING MACHINE AND PACKAGING METHOD THEREOF**
SCHALENVERSIEGELUNGSMASCHINE UND VERPACKUNGSVERFAHREN DAFÜR
MACHINE DE SCELLEMENT DE COQUES ET PROCÉDÉ D'EMBALLAGE CORRESPONDANT

(43) Date of publication of application: 01.02.2023
(73) Proprietor: Ulma Packaging, S.Coop., 20560 Oñati (ES)
(72) Inventor: MADINABEITIA FERNANDEZ, Ander, 20560 OÑATI (ES); LARRINGAN ERRASTI, Igor, 20560 Oñati (ES); IZQUIERDO EREÑO, Eneko, 20560 OÑATI (ES)
(74) Representative: Igartua, Ismael

(56) References cited:
- US-A1- 2011 308 206
- US-A1- 2013 074 453
- US-A1- 2020 346 804

## Description

### TECHNICAL FIELD

The present invention relates to tray sealing machines in which a cover film is sealed to a plurality of trays, and to packaging methods for said machines.

### PRIOR ART

A tray sealing machine comprises a sealing station configured for sealing a cover film to a plurality of trays which are distributed in a production direction, with a product arranged on each tray, a tray feed unit configured for feeding trays with said product arranged on each tray to the sealing station in the production direction; and a transfer device which is configured for simultaneously holding in a closing position a plurality of trays distributed in the production direction in the tray feed unit and for simultaneously conveying said held trays from the tray feed unit to the sealing station in said production direction.

The transfer device comprises a first tray gripper and a second tray gripper horizontally facing one another in a transverse direction relative to the production direction and configured for being moved synchronously between a respective opening position and a respective closing position in which they hold the trays. Said tray grippers are furthermore configured for being jointly moved in the production direction for feeding said held trays from the tray feed unit to the sealing station. Once the trays are arranged in the sealing station, the tray grippers open and release said trays.

The sealing station comprises an upper sealing tool and a lower sealing tool vertically facing one another. With the sealing station open, the sealing tools are separated from one another, which allows the tray grippers to introduce the trays in the sealing station. Once the trays with their respective products are released in said sealing station, the sealing station is closed, and a cover film is sealed to said trays arranged between said sealing tools. The cover film is fed to said sealing station such that it is located between both sealing tools and above the trays and their respective products.

When the tray grippers release the trays in the sealing station, said tray grippers are jointly moved in the opposite direction relative to the production direction to the tray feed unit, to be able to hold new trays in said tray feed unit and start another sealing cycle.

US2020346804A1 discloses a tray sealing machine of this type, wherein the movement speed of the tray grippers is controlled to increase machine productivity.

### DISCLOSURE OF THE INVENTION

The object of the invention is to provide a tray sealing machine and a method thereof, as defined in the claims.

A first aspect of the invention relates to a tray sealing machine comprising:
- a sealing station configured for sealing a cover film to a plurality of trays;
- a tray feed unit configured for feeding trays to the sealing station in a production direction; and
- a transfer device configured for simultaneously holding in a closing position a specific number of trays arranged in the tray feed unit and moving the held trays from said tray feed unit to the sealing station.

The transfer device comprises a first tray gripper and a second tray gripper horizontally facing one another in a transverse direction relative to the production direction and configured for simultaneously holding in the closing position of the transfer device a specific number of trays arranged in the tray feed unit and moving said held trays in the production direction from said tray feed unit to the sealing station.

The transfer device can be arranged, with respect to the trays, in a closing position in which it holds the trays, in which position the distance between both tray grippers is the smallest distance, and in an opening position in which it does not hold the trays, in which position the distance between both tray grippers is greater than the width of said trays.

Each tray comprises a product arranged thereon; therefore, when a tray is held and conveyed to the sealing station, the associated product is conveyed together with the tray on which it is arranged.

The transfer device comprises at least one retaining device associated with each tray to be held in the tray feed unit. Said transfer device thereby comprises at least a number of retaining devices equal to the number of trays that it can simultaneously hold and convey. Each retaining device is joined to one of the tray grippers with freedom of movement between a first position in which it prevents or limits the movement of a product arranged on the corresponding tray with respect to said tray in at least a specific direction, and a second position in which it does not prevent or limit said movement of said product.

Therefore, when the trays and their products are conveyed to the sealing station, a product is not moved in the specific direction and can thereby maintain its position with respect to the tray on which it is arranged, being correctly positioned when sealing is performed, with the sealing between the cover film and the tray being performed without any errors. This is particularly advantageous for frozen products, for rather unstable products, and for situations in which there is a low friction coefficient between the product and the tray on which said product is arranged, given that in these cases the product can move with respect to the corresponding tray during its joint movement to the sealing station in the case of causing the movement at high speeds, with the subsequent accelerations and decelerations. With the proposed machine, this movement between the product and tray is avoided, such that the speed and/or accelerations at which said trays and their products are conveyed to the sealing station can be increased, with machine productivity thereby being increased in a simple manner and ensuring at all times the correct position of the product with respect to the tray.

A second aspect of the invention relates to a packaging method for a tray sealing machine.

In the method, a plurality of trays arranged in a tray feed unit of the machine and distributed in a production direction are held with a transfer device of said machine, with each of said trays comprising a product arranged thereon; the transfer device is moved in the production direction and with said held trays until said trays are introduced in a sealing station of the machine; once the trays are arranged in the sealing station, said trays are released from the transfer device; a cover film is fed to the sealing station above the trays and their respective products; and in said sealing station, the cover film is sealed to the trays arranged and released in said sealing station.

The transfer device is configured for holding and conveying a specific number of trays simultaneously, and it comprises at least one retaining device associated with each of said trays. Said transfer device thereby comprises at least a number of retaining devices equal to the number of trays it can simultaneously hold and convey.

In the tray feed unit, a retaining device of said transfer device associated with each tray to be held by the transfer device in the tray feed unit is arranged in a first position in which said retaining device prevents or limits the movement of the product arranged on the associated tray with respect to said tray at least in a specific direction.

Subsequently, the transfer device is moved together with the retaining devices in the production direction to introduce the trays held by said transfer device in the sealing station, with the retaining devices being in the first position. Subsequently, with said retaining devices in the sealing station, said retaining devices are arranged in a second position in which they do not prevent or limit the movement of the products with respect to the corresponding trays, and said trays are released from the transfer device in order to subsequently perform sealing between the cover film and the trays.

The advantages described for the machine of the first aspect of the invention are also obtained with the method.

These and other advantages and features of the invention will become apparent in view of the figures and the detailed description of the invention.

### DESCRIPTION OF THE DRAWINGS

Figure 1 is a perspective view of an embodiment of the tray sealing machine of the invention.
Figure 2a shows a transfer device of the machine of Figure 1 in an open position in a tray feed unit of said machine.
Figure 2b shows the transfer device of Figure 2a in a closed position.
Figure 2c shows the transfer device of Figure 2a in a closed position and with a retaining device of said transfer device in a first position.
Figure 3a schematically shows an actuator associated with a retaining device configured for causing a horizontal and vertical movement of an upper stop of said retaining device of an embodiment of the machine of the invention, with the retaining device in a second position.
Figure 3b schematically shows the actuator of Figure 3a, with the retaining device moved horizontally with respect to the position of Figure 3a.
Figure 3c schematically shows the actuator of Figure 3a, with the retaining device moved vertically with respect to the position of Figure 3b.
Figure 4a schematically shows an actuator associated with a retaining device configured for causing a rotation of an upper stop of said retaining device of an embodiment of the machine of the invention, with the retaining device in a second position.
Figure 4b schematically shows the actuator of Figure 4a, with the retaining device in a first position.
Figure 5 shows a tray gripper of the machine of Figure 1, with a retaining assembly.
Figure 6a shows a plan view of a first segment of a tray gripper of another embodiment of the machine of the invention, with the transfer device in an open position and with a plurality of retaining devices in a second position.
Figure 6b shows a plan view of the first segment of the tray gripper of Figure 6a, with the transfer device in a closed position and with the retaining devices in the second position.
Figure 6c shows a plan view of the first segment of the tray gripper of Figure 6a, with the retaining device in the closed position and with the retaining devices in a first position.
Figure 7a shows a tray gripper of another embodiment of the machine of the invention.
Figure 7b shows the tray gripper of the machine of Figure 7a, with a retaining assembly preventing or limiting the movement of a plurality of products with respect to their corresponding trays.
Figure 8 shows trays introduced in the sealing station (without a frame and without the upper sealing tool) of the machine of Figure 1 and held by a transfer device of said machine.
Figure 9 shows trays introduced in the sealing station (without a frame and without the upper sealing tool) of the machine of Figure 1 and released from the transfer device of said machine.

### DETAILED DISCLOSURE OF THE INVENTION

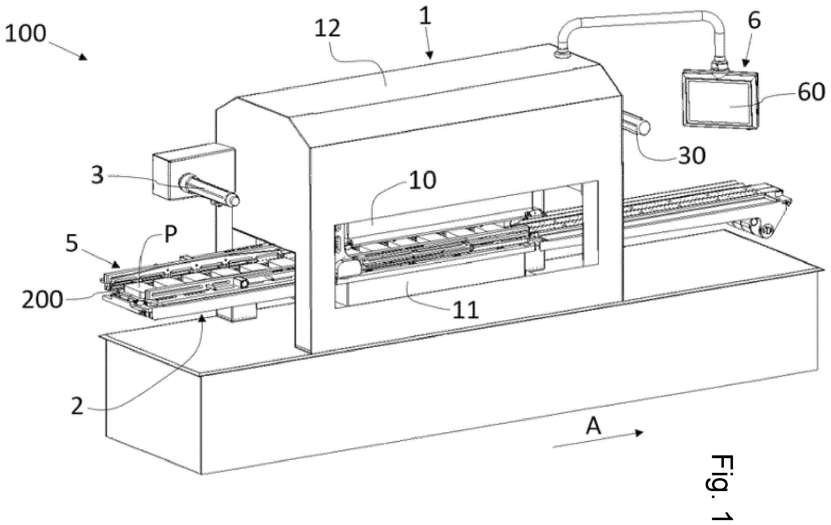

A first aspect of the invention relates to a tray sealing machine 100 such as the one shown by way of example in Figure 1. The machine 100 comprises a sealing station 1 surrounded by a frame 12 and configured for sealing a cover film (not depicted in the figures) to a plurality of trays 200 when each tray 200 comprises a product P arranged thereon. The machine 100 comprises a film feed unit 3 configured for feeding the cover film (not depicted in the figures) to the sealing station 1 above the trays 200 and the products P, and it can comprise a scrap take-up device 30 for taking up leftover cover film. The machine 100 can further comprise a cutting tool not depicted in the figures for cutting the cover film such that an assembly formed by a tray 200 with its corresponding product P and a sealed cover film is physically separated from another assembly, with each separate assembly thereby being a package 300. The cutting tool is preferably in the sealing station 1.

A user can control and/or program the machine 100 through a control unit 6, which can further comprise a control display 60, of said machine 100.

The machine 100 further comprises a tray feed unit 2 which is upstream of the sealing station 1 in a production direction A and configured for feeding trays 200 to the sealing station 1 in the production direction A; and a transfer device 5 configured for simultaneously holding in a closing position a specific number of trays 200 arranged in the tray feed unit 2 and moving the held trays 200 from said tray feed unit 2 to the sealing station 1.

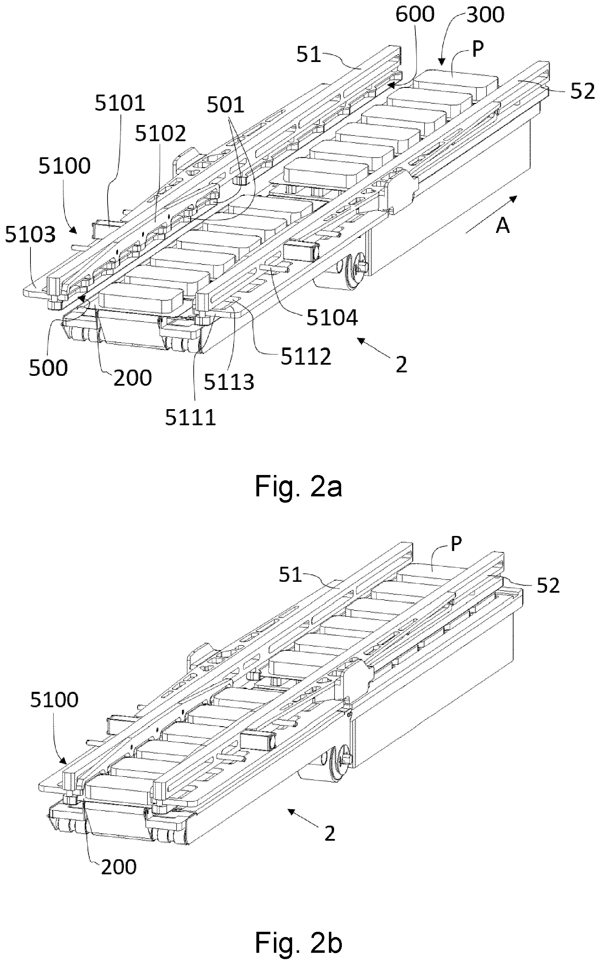

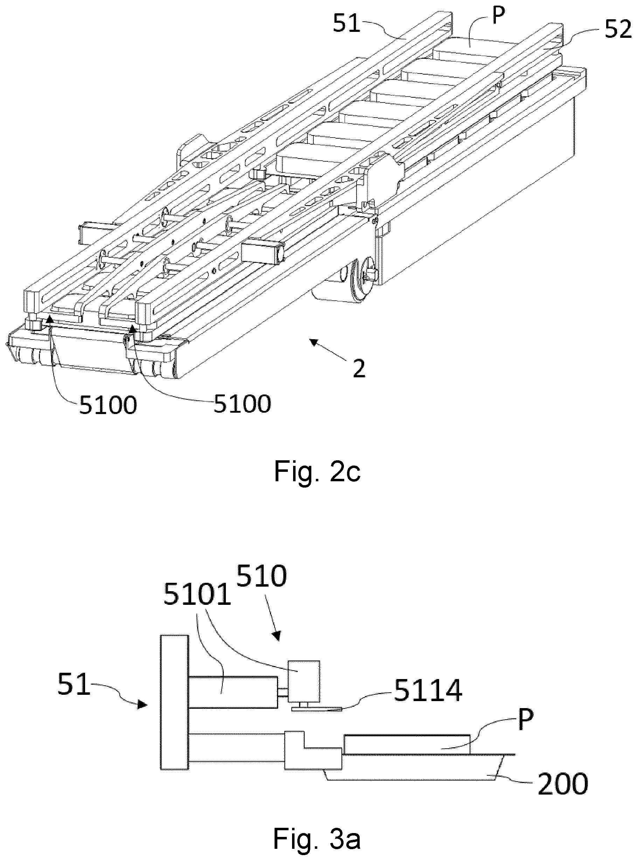

The transfer device 5 comprises a first tray gripper 51 and a second tray gripper 52, depicted for example in Figures 2a, 2b, 2c, 8, and 9, which are horizontally facing one another in a transverse direction relative to the production direction A and configured for holding the trays 200 in the closing position of the transfer device 5. The transfer device 5 is configured for being moved in the production direction A and the opposite direction between at least the tray feed unit 2 and the sealing station 1, with the tray grippers 51 and 52 being moved jointly and simultaneously. Each tray 200 comprises a product P arranged thereon, so when a tray 200 is held and conveyed to the sealing station 1, the associated product P is conveyed together with the tray 200 on which it is arranged.

The transfer device 5 can thereby be arranged, with respect to the trays 200, in a closing position in which it holds the trays 200, in which position the distance between both tray grippers 51 and 52 is the smallest distance, and in an opening position in which it does not hold the trays 200, in which position the distance between both tray grippers 51 and 52 is greater than the width of said trays 200.

The tray feed unit 2 comprises a conveyor belt 20 on which the trays 200 are arranged.

The sealing station 1 comprises an upper sealing tool 10 and a lower sealing tool 11 vertically facing one another. With the sealing station 1 open, the sealing tools 10 and 11 are separated from one another, which allows introducing the trays 200 with their respective products P in the sealing station 1 (and taking them out once the corresponding sealing has been performed). To seal the cover film to the trays 200 present in the sealing station 1, the sealing station 1 is closed and said cover film is heated and pressed against said trays 200 arranged between said sealing tools 10 and 11. To close the sealing station 1, it is preferably the lower sealing tool 11 that is moved with respect to the upper sealing tool 10, although both sealing tools 10 and 11 or even just the upper sealing tool 10 could be movable.

Each tray gripper 51 and 52 defines a plurality of partial tray housings 500 distributed in the production direction A. Preferably, each partial tray housing 500 is configured for partially taking in a tray 200 and is demarcated between two teeth 501 separated in the production direction A of the corresponding tray gripper 51 and 52, thereby comprising a shape adapted to the outer contour of the trays 200. By way of example, for the trays 200 depicted in the figures (with a rectangular outer contour with rounded vertexes), each partial tray housing 500 preferably comprises a U shape.

The transfer device 5 can comprise a first segment and a second segment downstream of the first segment in the production direction A, the tray grippers 51 and 52 thereby comprising a respective first segment and second segment. The partial tray housings 500 are demarcated in the first segment of the tray grippers 51 and 52, and each of said tray grippers 51 and 52 comprises a plurality of partial package housings 600 distributed in the production direction A and demarcated in the second segment, with the number of partial package housings 600 preferably being equal to the number of partial tray housings 500. Therefore, when the transfer device 5 transitions to the closing position, it holds a plurality of trays 200 in the tray feed unit 2 with the first segment and it holds the packages 300 generated in the sealing station 1 with the second segment. When the held trays 200 are moved to the sealing station 1, at the same time the generated packages 300 are taken out of said sealing station 1 (with the same action).

The transfer device 5 is configured for holding and conveying a specific number of trays 200 simultaneously, and it comprises a retaining device 510 associated with each of said trays 200 to be held by said transfer device 5 in the tray feed unit 2. Said transfer device 5 thereby comprises at least a number of retaining devices 510 equal to the number of trays 200 which it can simultaneously hold and convey. Each retaining device 510 is joined to one of the tray grippers 51 and 52 with freedom of movement with respect to said corresponding tray gripper 51 and 52, between a first position in which it prevents or limits the movement of a product P with respect to the tray 200 on which it is arranged at least in a specific direction, and a second position in which it does not prevent or limit said movement of said product P with respect to its corresponding tray 200. Therefore, when said tray 200 is moved to the sealing station 1 with its corresponding product P, as a result of the retaining device 510 associated with said product P being in the first position, the product P is kept in the correct position with respect to its tray 200, for subsequently sealing the cover film on said tray 200 (the product P is packaged between said cover film and the tray 200).

When the transfer device 5 comprises two segments as described above, the retaining devices 510 are arranged in the first segment, given that when the trays 200 and their products P are in the second segment the cover film is already sealed to said trays 200 and the product P no longer moves with respect to its corresponding tray 200, or at least it cannot come out of the corresponding package 300.

In some embodiments, such as the ones shown in Figures 2a, 2b, 2c, 8, and 9, all the retaining devices 510 which are joined to one and the same tray gripper 51 and 52 are attached to one another and form a retaining assembly 5100. In some embodiments, such as the ones shown in Figures 2a, 2b, 2c, 8, and 9, all the retaining devices 510 which are attached to one another and joined to one and the same tray gripper 51 and 52 can be integrated in a common element 5103, and the machine 100 can comprise an actuator 5101 for causing the movement of said common element 5103 through an auxiliary element 5102 connected to said actuator 5101 and to said common element 5103. Therefore, despite comprising a plurality of retaining devices 510 joined to one and the same tray gripper 51 and 52, since said retaining devices 510 are attached to one another, a single actuator 5101 is sufficient and the amount of required elements (actuators in this case) and the weight of said tray gripper 51 and 52 are reduced, and the machine 100 is simplified. In said embodiment of Figures 2a, 2b, 2c, 8, and 9, the machine 100 comprises a retaining assembly 5100 associated with the first tray gripper 51 and a retaining assembly 5100 associated with the second tray gripper 52. A retaining assembly 5100 can further comprise at least one guide rod 5104 attached to the corresponding tray gripper 51 and 52 for guiding the position change of the common element 5103.

The retaining device 510 is joined to the corresponding tray gripper 51 and 52, such that it is moved integrally with said corresponding tray gripper 51 and 52 both when the tray gripper 51 and 52 is moved in the transverse direction relative to the production direction A and when it is moved in said production direction A. All the retaining devices 510 can be joined to one and the same tray gripper 51 and 52, or some retaining devices 510 can be joined to the first tray gripper 51 and other retaining devices 510 can be joined to the second tray gripper 52 (arranged in an adjacent manner in the production direction A in one and the same tray gripper 51 and 52, in a staggered manner, or as required).

In the second position, the retaining devices 510 are outside the vertical path of any of the sealing tools 10 and 11 of the sealing station 1, such that they do not interfere in the sealing operation to be performed in said sealing station 1.

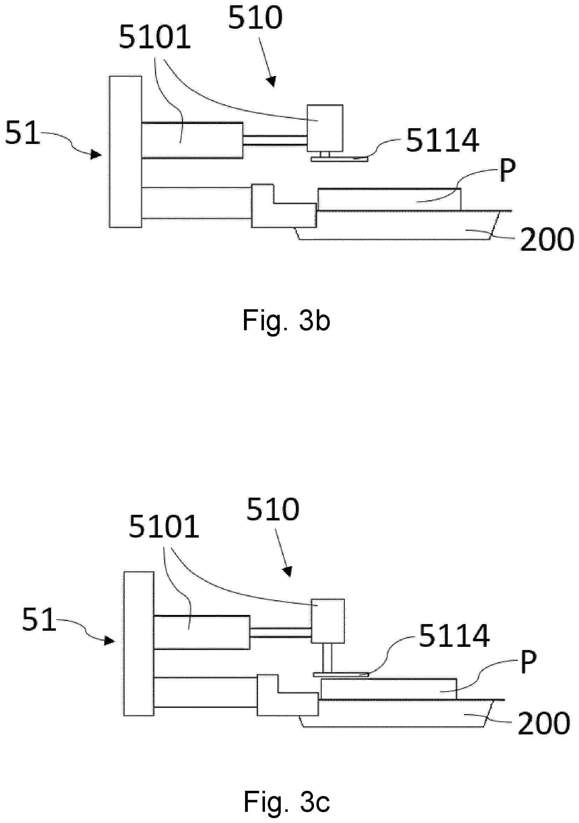

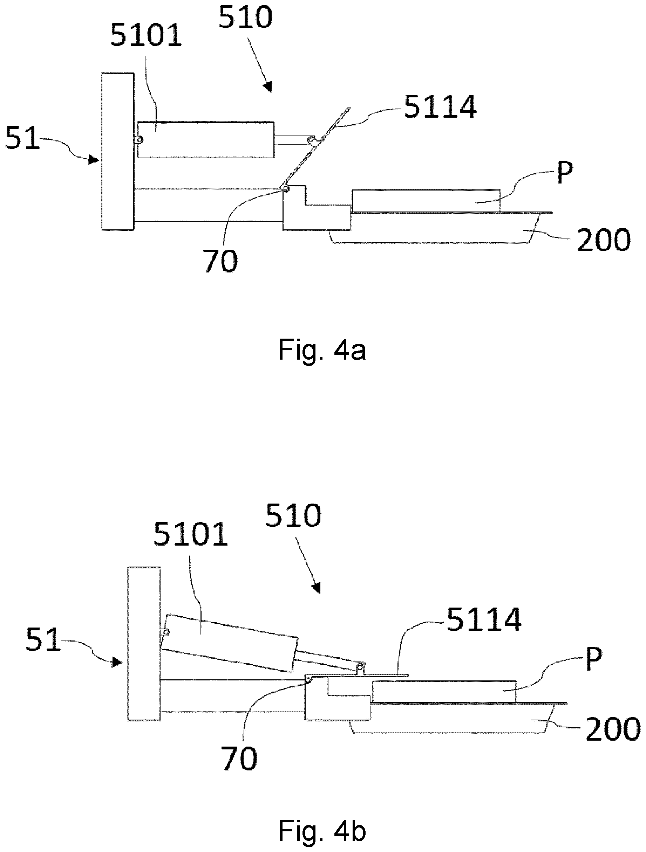

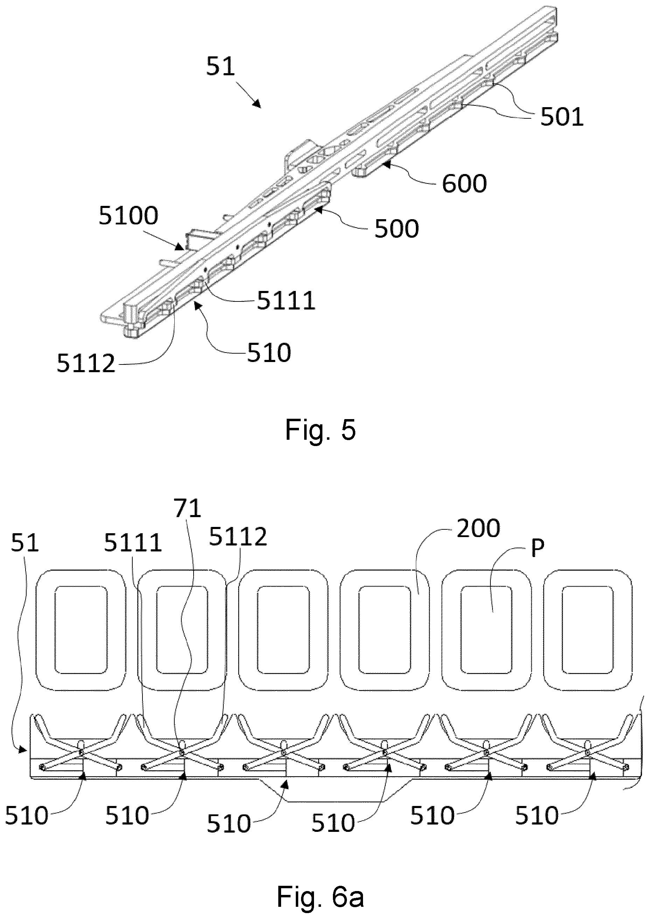

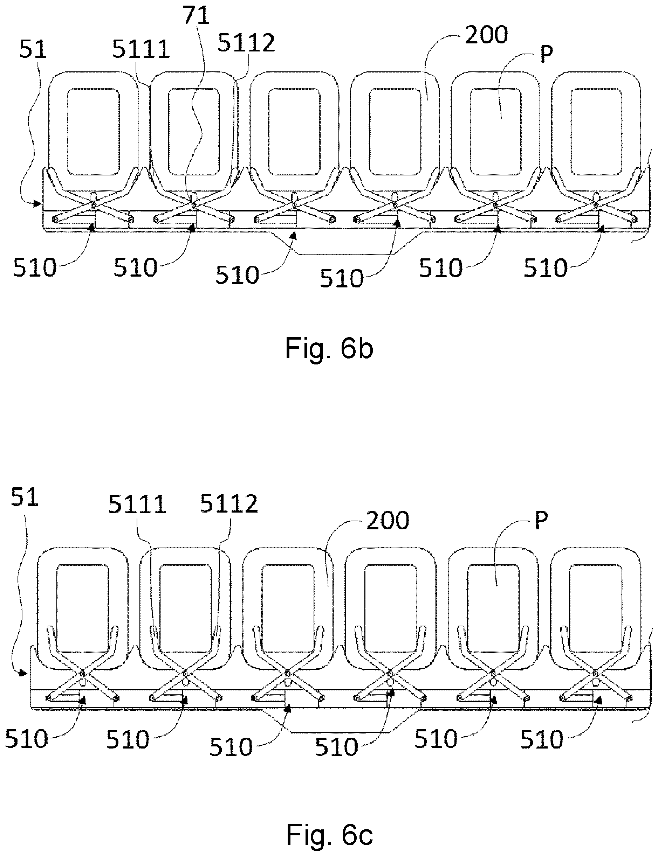

An actuator 5101 can be configured for moving the corresponding retaining devices 510 in a horizontal and transverse direction relative to the production direction A, in a vertical direction, in a horizontal and vertical direction (see Figures 3a, 3b, and 3c) by means of a rotation with respect to a rotation axis 70 extending in the production direction A (see examples of Figures 4a and 4b), or by means of a rotation with respect to a vertical rotation axis 71 (see examples of Figures 6a, 6b, and 6c).

The retaining devices 510 can comprise different configurations, but preferably all the retaining devices 510 associated with one and the same tray gripper 51 and 52 are the same.

In some embodiments of the machine 100, the retaining device 510 comprises two transverse stops 5111 and 5112 facing one another in the production direction A and separated from one another in said production direction A by a distance greater than the length of the corresponding product P in said production direction A and less than the length of said corresponding tray 200 in said production direction A (preferably, therefore, less than the separation distance between two teeth 501 demarcating the corresponding partial tray housing 500). Said transverse stops 5111 and 5112 are configured for being arranged one on either side of said product P in the forward movement direction A in the first position of the retaining device 510, such that they prevent the movement of the product with respect to the tray 200 at least in the production direction A (and the opposite direction). Each transverse stop 5111 and 5112 can be a protrusion extending in a horizontal and transverse direction relative to the production direction A, such as the ones shown in Figure 5, for example, or they could even have a scissor configuration, as depicted in Figures 6a, 6b, and 6c. Preferably, the distance between the transverse stops 5111 and 5112 is adjustable, such that the retaining device 510 can be adapted to different types (and/or sizes) of products P.

In some embodiments of the machine 100, such as in the machine 100 comprising a tray gripper 51 like the one shown in Figure 5, the retaining device 510 comprises, in addition to the transverse stops 5111 and 5112, a longitudinal stop 5113 extending in the production direction A and between the two transverse stops 5111 and 5112. The longitudinal stop 5113 is configured for being arranged, in the first position of the retaining device 510, between the product and the corresponding tray gripper 51 and 52, preventing said product from being moved towards said tray gripper 51 and 52. Preferably, the position of the longitudinal stop 5113 between the corresponding product P and the tray gripper 51 and 52 is adjustable, such that the retaining device 510 can be adapted to different types (and/or sizes) of products P. Said adjustment of the position of the longitudinal stop 5113 can be performed by means of regulating the movement caused by the actuating device 5101, for example, or by modifying the arrangement of the longitudinal stop 5113 with respect to the corresponding transverse stops 5111 and 5112. In this configuration, the distance between the transverse stops 5111 and 5112 could also be adjustable.

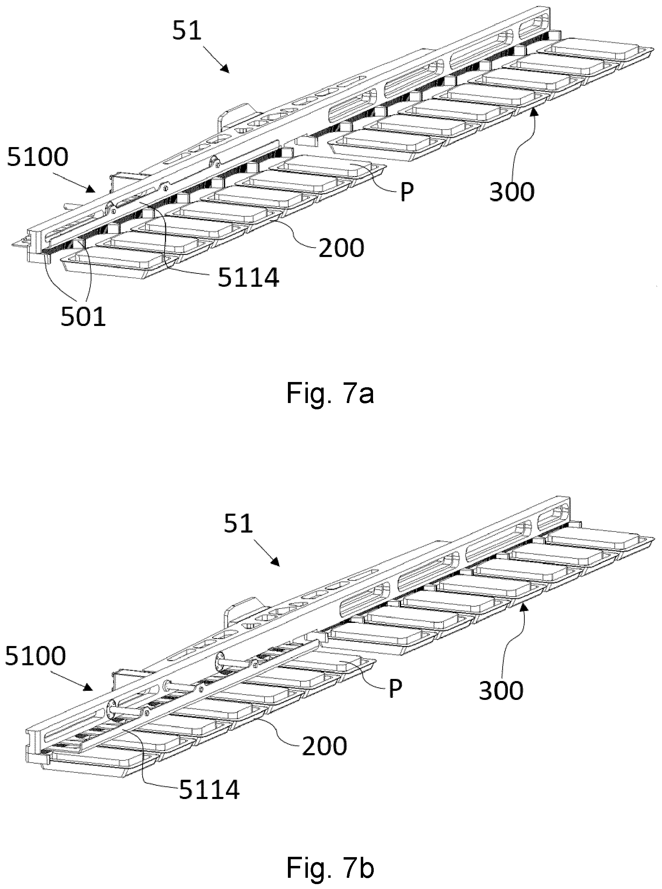

In some embodiments of the machine 100, such as in the machine 100 comprising a tray gripper 51 like the one shown in Figures 7a and 7b, the retaining device 510 comprises an upper stop 5114 configured for being arranged above the corresponding product P when said retaining device 510 is in the first position, such that it prevents the movement of the product P raising up from the tray 200 on which it is arranged. The upper stop 5114 can be configured for being arranged on the product P, without contact, or for contacting the product P by pressing the product P against the corresponding tray 200 or not. In the case of pressing the product P, said upper stop 5114 immobilizes the product P with respect to the tray 200. The vertical distance between the upper stop 5114 and the tray 200 associated with said retaining device 510 can be adjustable.

Using an upper stop 5114 which is arranged on the product P without contact is particularly advantageous for conveying trays 200 comprising a wall around a base where the product P is arranged (in the case of Figures 7a and 7b), such that the walls themselves of the tray 200 prevent or limit the movement of the product P with respect to said tray 200 in the horizontal directions, whereas the upper stop 5114 prevents or limits the vertical movement of said product P, preventing said product P from bounding over said walls due to the accelerations and decelerations received during conveyance.

Any combination between the configurations described for the retaining device 510 is possible. In that sense, for example, a retaining device 510 can comprise two transverse stops 5111 and 5112 (with a distance between same that may or may not be adjustable) and at least one upper stop 5114; or two transverse stops 5111 and 5112 (with a distance between same that may or may not be adjustable), at least one longitudinal stop 5113 (with a distance between same that may or may not be adjustable), and at least one upper stop 5114, etc.

A second aspect of the invention relates to a packaging method for a tray sealing machine, such as the machine 100 of the first aspect of the invention in any of its configurations and/or embodiments, thereby comprising an embodiment suitable for the corresponding embodiment or configuration of said machine 100. Likewise, the machine 100 is configured for supporting the method of the second aspect of the invention in any of its configurations and/or embodiments, thereby comprising an embodiment suitable for the corresponding embodiment or configuration of said method.

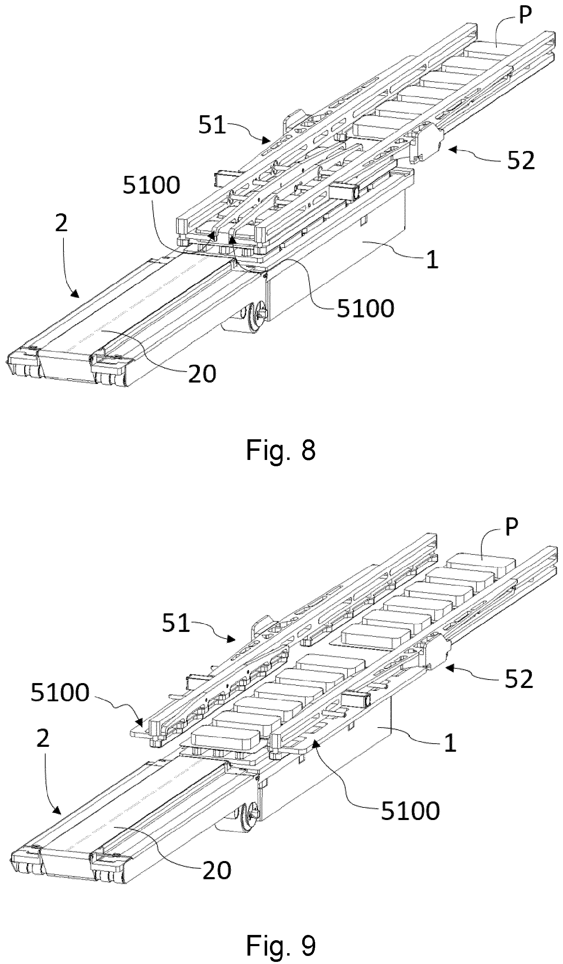

In the method, a specific number of trays 200 arranged in a tray feed unit 2 of the machine 100, distributed in a production direction A and with a product P on each of said trays 200 (see Figure 2a), are held with a transfer device 5 of said machine 100. The transfer device 5 is moved in the production direction A with said held trays 200 until said trays 200 are introduced in a sealing station 1 of the machine 100 (see Figure 8). Once arranged in the sealing station 1, said trays 200 are released from the transfer device 5, see Figure 9, causing a movement of the tray grippers 51 and 52 that were holding them.

Furthermore, in the method a cover film is fed to the sealing station 1 above the trays 200 and their respective products P, and in said sealing station 1, the cover film is sealed to the trays 200 arranged and released in said sealing station 1. As described for the machine 100, in some embodiments of the method a plurality of trays 200 are introduced in the sealing station 1 at the same time as previously sealed trays 200 (therefore the resulting packages 300) are discharged from said sealing station 1.

In the tray feed unit 2, a retaining device 510 of said transfer device 5 associated with each tray 200 to be held by the transfer device 5 in the tray feed unit 2 is arranged in a first position in which said retaining device 510 prevents or limits the movement of the product P arranged on the corresponding tray 200, with respect to said tray 200, at least in a specific direction. Subsequently, with the trays 200 being held and with the retaining devices 510 in the first position, the transfer device 5 is moved together with the retaining devices 510 in the production direction A to introduce said trays 200 in the sealing station 1. The products P are thereby kept correctly positioned on the trays 200 during the conveyance thereof to the sealing station 1, as described above.

Subsequently, with the transfer device 5 halted, said retaining devices 510 are arranged in a second position in which they do not prevent or limit the movement of the products P with respect to the corresponding trays 200, and said trays 200 are released from the transfer device 5 in order to subsequently perform sealing between the cover film and the trays 200 in said sealing station 1 without the tray grippers 51 and 52 and the retaining devices 510 interfering. Furthermore, when the retaining devices 510 are moved to the second position, the transversal path relative to the production direction A taken by the tray grippers 51, 52 for releasing the trays 200 is reduced, and, therefore, the time needed for doing so is reduced, where the packaging speed of the machine 100 can be increased. Preferably, the movement of the tray grippers 51 and 52 for taking the transfer device 5 to the opening position and the movement of the retaining devices 510 to the second position are performed simultaneously, with the total time needed for being able to perform sealing after introducing the trays 200 in the sealing station 1 being reduced.

The action of releasing the trays 200 and the action of moving the retaining devices 510 to the second position can be done simultaneously or one before the other.

The change from the first position to the second position and vice versa of a retaining device 510 can be performed by means of a movement of said retaining device 510 in a horizontal and transverse direction relative to the production direction A, by means of a vertical movement of said retaining device 510, by means of a rotation of said retaining device 510 with respect to a vertical rotation axis 71, or by means of a rotation of said retaining device 510 with respect to a rotation axis 70 extending in the production direction, for example, as described for the machine 100.

Preferably, all the retaining devices 510 are caused to change from the first position to the second position and vice versa jointly and simultaneously, as described for the machine 100 also.

As occurs with the machine 100, in the method each retaining device 510 is arranged in the first position to prevent or limit the movement of the corresponding product P in at least one horizontal direction and/or to prevent or limit the vertical movement of the corresponding product P.

Aspects and features described for the machine 100 and not described for the method are also valid and applicable to said method. Likewise, aspects and features described for the method and not described for the machine 100 are also valid and applicable to said machine 100.

## Claims

1. Tray sealing machine comprising a sealing station (1) configured for sealing a cover film to a plurality of trays (200); a tray feed unit (2) configured for feeding trays (200) to the sealing station (1) in a production direction (A); and a transfer device (5) configured for simultaneously holding in a closing position a specific number of trays (200) at least in the tray feed unit (2) and moving the held trays (200) from said tray feed unit (2) to the sealing station (1), the transfer device (5) comprising a first tray gripper (51) and a second tray gripper (52) horizontally facing one another in a transverse direction relative to the production direction (A) and configured for holding the trays (200) in the closing position of the transfer device (5), **characterized in that** the transfer device (5) comprises at least one retaining device (510) for each tray (200) to be held by said transfer device (5) in the tray feed unit (2), with each retaining device (510) being joined to one of the tray grippers (51, 52) with freedom of movement between a first position in which it prevents or limits the movement of a product (P) arranged on the corresponding tray (200) with respect to said tray (200) at least in a specific direction, and a second position in which it does not prevent or limit said movement of said product (P).

2. Tray sealing machine according to claim 1, wherein the transfer device (5) comprises a plurality of retaining devices (510) joined to one and the same tray gripper (51, 52), with said retaining devices (510) being joined to one another such that they are configured for jointly and simultaneously changing position.

3. Tray sealing machine according to claim 1 or 2, comprising at least one actuator (5101) configured for causing the change in position of the retaining devices (510), with said actuator (5101) being configured for moving the retaining devices (510) in a horizontal and transverse direction relative to the production direction (A), in a vertical direction, in a horizontal and vertical direction by means of a rotation with respect to a rotation axis (70) extending in the production direction (A), or by means of a rotation with respect to a vertical rotation axis (71).

4. Tray sealing machine according to claim 3, wherein the actuator (5101) is configured for moving the retaining devices (510) in a horizontal and transverse direction relative to the production direction (A).

5. Tray sealing machine according to claim 3, wherein the actuator (5101) is configured for vertically moving the retaining devices (510).

6. Tray sealing machine according to claim 3, wherein the actuator (5101) is configured for moving the retaining devices (510) with respect to the tray gripper (51, 52) causing the rotation thereof with respect to a rotation axis (70) extending in the production direction (A) or with respect to a vertical rotation axis (71).

7. Tray sealing machine according to any of claims 1 to 6, wherein at least one of the retaining devices (510) comprises two transverse stops (5111, 5112) facing one another in the production direction (A) and separated from one another in said production direction (A) by a distance greater than the length of the product (P) arranged on the tray (200) and less than the length of said tray (200) in said production direction (A), with the transverse stops (5111, 5112) being configured for preventing or limiting the movement of the corresponding product (P) in the production direction (A) and in the opposite direction relative to said production direction (A).

8. Tray sealing machine according to claim 7, wherein the retaining device (510) comprising two transverse stops (5111, 5112) further comprises a longitudinal stop (5113) extending in the production direction (A) and between said two transverse stops (5111, 5112), with the longitudinal stop (5113) being configured for being arranged, in the first position of the retaining device (510), between the product (P) arranged on the tray (200) with which said retaining device (510) is associated and the tray gripper (51, 52) to which said retaining device (510) is joined.

9. Tray sealing machine according to claim 8, wherein the position of the longitudinal stop (5113) between the product (P) arranged on the corresponding tray (200) and the tray gripper (51, 52) to which said retaining device (510) is joined is adjustable in a horizontal and transverse direction relative to the production direction (A).

10. Tray sealing machine according to any of claims 7 to 9, wherein the distance in the production direction (A) between the two transverse stops (5111, 5112) of the retaining device (510) comprising said transverse stops (5111, 5112) is adjustable.

11. Tray sealing machine according to any of claims 1 to 10, wherein at least one of the retaining devices (510) comprises an upper stop (5114) to prevent or limit at least the vertical movement of the corresponding product (P), with the upper stop (5114) being configured for being arranged above the product (P) arranged on the corresponding tray (200) when said retaining device (510) is in the first position.

12. Tray sealing machine according to claim 11, wherein the upper stop (5114) is configured for being arranged such that it contacts the product (P) arranged on the corresponding tray (200) when said retaining device (510) is in the first position.

13. Tray sealing machine according to claim 11 or 12, wherein the vertical distance between the upper stop (5114) of the retaining device (510) and the tray (200) associated with said retaining device (510) is adjustable.

14. Packaging method for a tray sealing machine, wherein a plurality of trays (200) arranged in a tray feed unit (2) of the machine (100), distributed in a production direction (A) and with a product (P) arranged on each of said trays (200) are arranged with a transfer device (5) of said machine (100); the transfer device (5) is moved in the production direction (A) with said held trays (200) until said trays (200) are introduced in a sealing station (1) of the machine (100); once the trays (200) are arranged in the sealing station (1), said trays (200) are released from the transfer device (5); a cover film is fed to the sealing station (1) above the trays (200) and their respective products (P); and in said sealing station (1), the cover film is sealed to the trays (200) arranged and released in said sealing station (1), **characterized in that** in the tray feed unit (2), a retaining device (510) of said transfer device (5) associated with each tray (200) to be held by the transfer device (5) in the tray feed unit (2) is arranged in a first position in which said retaining device (510) prevents or limits the movement of the product (P) arranged on the associated tray (200) with respect to said tray (200) at least in a specific direction, the transfer device (5) is subsequently moved together with the retaining devices (510) in the production direction (A) to introduce the trays (200) held by said transfer device (5) in the sealing station (1), with the retaining devices (510) being in the first position, and subsequently, with said retaining devices (510) in the sealing station (1), said retaining devices (510) are arranged in a second position in which they do not prevent or limit the movement of the products (P) with respect to the corresponding trays (200), and said trays (200) are released from the transfer device (5) in order to subsequently perform sealing between the cover film and the trays (200).

15. Packaging method according to claim 14, wherein a plurality of retaining devices (510) are caused to change from the first position to the second position and vice versa jointly and simultaneously.

16. Packaging method according to claim 14 or 15, wherein each retaining device (510) is arranged in the first position to prevent or limit the movement of the corresponding product (P) in at least one horizontal direction, and/or to prevent or limit the vertical movement of the corresponding product (P).

## Patentansprüche

1. Schalenversiegelungsmaschine umfassend eine Versiegelungsstation (1), welche dazu ausgebildet ist, eine Deckfolie auf einer Vielzahl von Schalen (200) zu versiegeln; eine Schalenzuführeinheit (2), welche dazu ausgebildet ist, Schalen (200) zur Versiegelungsstation (1) in eine Herstellungsrichtung (A) zuzuführen; und eine Übertragungsvorrichtung (5), welche dazu ausgebildet ist, in einer Schließstellung eine spezifische Anzahl von Schalen (200) mindestens in der Schalenzuführeinheit (2) gleichzeitig zu halten und die gehaltenen Schalen (200) von der genannten Schalenzuführeinheit (2) in die Versiegelungsstation (1) zu bewegen, wobei die Übertragungsvorrichtung (5) einen ersten Schalengreifer (51) und einen zweiten Schalengreifer (52) umfasst, welche in einer bezüglich der Herstellungsrichtung (A) Querrichtung horizontal zueinander zugewandt sind und dazu ausgebildet sind, die Schalen (200) in der Schließstellung der Übertragungsvorrichtung (5) zu halten, **dadurch gekennzeichnet, dass** die Übertragungsvorrichtung (5) mindestens eine Rückhaltevorrichtung (510) für jede Schale (200), die von der genannten Übertragungsvorrichtung (5) in der Schalenzuführeinheit (2) gehalten werden soll, umfasst, wobei jede Rückhaltevorrichtung (510) mit einem der Schalengreifer (51, 52) mit Bewegungsfreiheit zwischen einer ersten Stellung, in welcher sie die Bewegung eines Produkts (P), welches auf der entsprechenden Schale (200) angeordnet ist, in Bezug auf die genannte Schale (200) mindestens in eine spezifische Richtung verhindert oder begrenzt, und einer zweiten Stellung, in welcher sie die genannte Bewegung des genannten Produkts (P) nicht verhindert oder begrenzt, verbunden ist.

2. Schalenversiegelungsmaschine nach Anspruch 1, wobei die Übertragungsvorrichtung (5) eine Vielzahl von Rückhaltevorrichtungen (510) umfasst, welche mit einem und demselben Schalengreifer (51, 52) verbunden sind, wobei die genannten Rückhaltevorrichtungen (510) so miteinander verbunden sind, dass sie dazu ausgebildet sind, die Stellung gemeinsam und gleichzeitig zu ändern.

3. Schalenversiegelungsmaschine nach Anspruch 1 oder 2, mindestens umfassend einen Aktuator (5101), welcher dazu ausgebildet ist, die Änderung bei der Stellung der Rückhaltevorrichtungen (510) zu bewirken, wobei der genannte Aktuator (5101) dazu ausgebildet ist, die Rückhaltevorrichtungen (510) in eine horizontale und bezüglich der Herstellungsrichtung (A) Querrichtung, in eine vertikale Richtung, in eine horizontale und vertikale Richtung mittels einer Rotation in Bezug auf eine Rotationsachse (70), welche sich in Herstellungsrichtung (A) erstreckt, oder mittels einer Rotation in Bezug auf eine vertikale Rotationsachse (71) zu bewegen.

4. Schalenversiegelungsmaschine nach Anspruch 3, wobei der Aktuator (5101) dazu ausgebildet ist, die Rückhaltevorrichtungen (510) in eine horizontale und bezüglich der Herstellungsrichtung (A) Querrichtung zu bewegen.

5. Schalenversiegelungsmaschine nach Anspruch 3, wobei der Aktuator (5101) dazu ausgebildet ist, die Rückhaltevorrichtungen (510) vertikal zu bewegen.

6. Schalenversiegelungsmaschine nach Anspruch 3, wobei der Aktuator (5101) dazu ausgebildet ist, die Rückhaltevorrichtungen (510) in Bezug auf den Schalengreifer (51, 52) zu bewegen, sodass die Rotation derselben in Bezug auf eine Rotationsachse (70), welche sich in Herstellungsrichtung (A) erstreckt, oder in Bezug auf eine vertikale Rotationsachse (71) bewirkt wird.

7. Schalenversiegelungsmaschine nach einem der Ansprüche 1 bis 6, wobei mindestens eine der Rückhaltevorrichtungen (510) zwei Queranschläge (5111, 5112) umfasst, welche in der Herstellungsrichtung (A) zueinander zugewandt sind und in der genannten Herstellungsrichtung (A) mit einem Abstand größer als die Länge des Produkts (P), welches auf der Schale (200) angeordnet ist, und kleiner als Länge der genannten Schale (200) in der genannten Herstellungsrichtung (A) voneinander beabstandet sind, wobei die Queranschläge (5111, 5112) dazu ausgebildet sind, die Bewegung des entsprechenden Produkts (P) in die Herstellungsrichtung (A) und in die bezüglich der genannten Herstellungsrichtung (A) entgegengesetzte Richtung zu verhindern oder zu begrenzen.

8. Schalenversiegelungsmaschine nach Anspruch 7, wobei die Rückhaltevorrichtung (510), welche zwei Queranschläge (5111, 5112) umfasst, zusätzlich einen Längsanschlag (5113) umfasst, welcher sich in Herstellungsrichtung (A) und zwischen den genannten beiden Queranschläge (5111, 5112) erstreckt, wobei der Längsanschlag (5113) dazu ausgebildet ist, in der ersten Stellung der Rückhaltevorrichtung (510), zwischen dem Produkt (P), welches auf der Schale (200) angeordnet ist, mit welcher die genannte Rückhaltevorrichtung (510) assoziiert ist, und dem Schalengreifer (51, 52), mit welchem die genannte Rückhaltevorrichtung (510) verbunden ist, angeordnet zu werden.

9. Schalenversiegelungsmaschine nach Anspruch 8, wobei die Stellung des Längsanschlags (5113) zwischen dem Produkt (P), welches auf der entsprechenden Schale (200) angeordnet ist, und dem Schalengreifer (51, 52), mit welchem die genannte Rückhaltevorrichtung (510) verbunden ist, in einer horizontalen und bezüglich der Herstellungsrichtung (A) Querrichtung einstellbar ist.

10. Schalenversiegelungsmaschine nach einem der Ansprüche 7 bis 9, wobei der Abstand in der Herstellungsrichtung (A) zwischen den beiden Queranschlägen (5111, 5112) der Rückhaltevorrichtung (510), welche die genannten Queranschläge (5111, 5112) umfasst, einstellbar ist.

11. Schalenversiegelungsmaschine nach einem der Ansprüche 1 bis 10, wobei mindestens eine der Rückhaltevorrichtungen (510) einen oberen Anschlag (5114) umfasst, um mindestens die vertikale Bewegung des entsprechenden Produkts (P) zu verhindern oder zu begrenzen, wobei der obere Anschlag (5114) dazu ausgebildet ist, über dem Produkt (P), welches auf der entsprechenden Schale (200) angeordnet ist, angeordnet zu werden, wenn die genannte Rückhaltevorrichtung (510) in der ersten Stellung ist.

12. Schalenversiegelungsmaschine nach Anspruch 11, wobei der obere Anschlag (5114) dazu ausgebildet ist, so angeordnet zu werden, dass er das Produkt (P), welches auf der entsprechenden Schale (200) angeordnet ist, berührt, wenn die genannte Rückhaltevorrichtung (510) in der ersten Stellung ist.

13. Schalenversiegelungsmaschine nach Anspruch 11 oder 12, wobei der vertikale Abstand zwischen dem oberen Anschlag (5114) der Rückhaltevorrichtung (510) und der Schale (200), welche mit der genannten Rückhaltevorrichtung (510) assoziiert ist, einstellbar ist.

14. Verpackungsverfahren für eine Schalenversiegelungsmaschine, wobei eine Vielzahl von Schalen (200), welche in einer Schalenzuführeinheit (2) der Maschine (100) angeordnet sind, in eine Herstellungsrichtung (A) verteilt sind und mit einem auf jeder dieser Schalen (200) angeordneten Produkt (P), mit einer Übertragungsvorrichtung (5) der genannten Maschine (100) angeordnet werden; die Übertragungsvorrichtung (5) in Herstellungsrichtung (A) mit den gehaltenen Schalen (200) bewegt wird, bis die genannten Schalen (200) in eine Versiegelungsstation (1) der Maschine (100) eingeführt werden; sobald die Schalen (200) in der Versiegelungsstation (1) angeordnet sind, werden die genannten Schalen (200) von der Übertragungsvorrichtung (5) freigegeben; eine Deckfolie zur Versiegelungsstation (1) über den Schalen (200) und deren jeweiligen Produkten (P) zugeführt wird; und in der genannten Versiegelungsstation (1), die Deckfolie auf den Schalen (200), welche in der genannten Versiegelungsstation (1) angeordnet und freigegeben sind, versiegelt wird, **dadurch gekennzeichnet, dass** in der Schalenzuführeinheit (2), eine Rückhaltevorrichtung (510) der genannten Übertragungsvorrichtung (5), welche mit jeder Schale (200), welche von der Übertragungsvorrichtung (5) in der Schalenzuführeinheit (2) gehalten werden soll, assoziiert ist, in einer ersten Stellung angeordnet wird, in welcher die genannte Rückhaltevorrichtung (510) die Bewegung des Produkts (P), welches auf der assoziierten Schale (200) angeordnet ist, in Bezug auf die genannte Schale (200) mindestens in eine spezifische Richtung verhindert oder begrenzt, die Übertragungsvorrichtung (5) anschließend zusammen mit den Rückhaltevorrichtungen (510) in die Herstellungsrichtung (A) bewegt wird, um die von der genannten Übertragungsvorrichtung (5) gehaltenen Schalen (200) in die Versiegelungsstation (1) einzuführen, wobei die Rückhaltevorrichtungen (510) in der ersten Stellung sind, und anschließend, mit der genannten Rückhaltevorrichtungen (510) in der Versiegelungsstation (1), die genannten Rückhaltevorrichtungen (510) in einer zweiten Stellung angeordnet werden, in welcher sie die Bewegung der Produkte (P) in Bezug auf die entsprechenden Schalen (200) nicht verhindern oder nicht begrenzen, und die genannten Schalen (200) von der Übertragungsvorrichtung (5) befreit werden, um anschließend die Versiegelung zwischen der Deckfolie und den Schalen (200) durchzuführen.

15. Verpackungsverfahren nach Anspruch 14, wobei es bewirkt wird, dass eine Vielzahl von Rückhaltevorrichtungen (510) gemeinsam und gleichzeitig von der ersten Stellung in die zweite Stellung und umgekehrt geändert werden.

16. Verpackungsverfahren nach Anspruch 14 oder 15, wobei jede Rückhaltevorrichtung (510) in der ersten Stellung angeordnet wird, um die Bewegung des entsprechenden Produkts (P) in mindestens eine horizontale Richtung zu verhindern oder zu begrenzen, und/oder um die vertikale Bewegung des entsprechenden Produkts (P) zu verhindern oder zu begrenzen.

## Revendications

1. Machine de scellement de coques comprenant une station de scellement (1) configurée pour sceller un film de recouvrement à une pluralité de coques (200); une unité d'alimentation de coques (2) configurée pour alimenter des coques (200) à la station de scellement (1) dans une direction de production (A); et un dispositif de transfert (5) configuré pour maintenir simultanément dans une position de fermeture un nombre spécifique de coques (200) au moins dans l'unité d'alimentation de coques (2) et déplacer les coques maintenues (200) depuis ladite unité d'alimentation de coques (2) à la station de scellement (1), le dispositif de transfert (5) comprenant un premier préhenseur de coque (51) et un deuxième préhenseur de coque (52) l'un face à l'autre horizontalement dans une direction transversale par rapport à la direction de production (A) et configurés pour maintenir les coques (200) dans la position de fermeture du dispositif de transfert (5), **caractérisée en ce que** le dispositif de transfert (5) comprend au moins un dispositif de retenue (510) pour chaque coque (200) devant être maintenue par ledit dispositif de transfert (5) dans l'unité d'alimentation de coques (2), chaque dispositif de retenue (510) étant relié à l'un des préhenseurs de coque (51, 52) avec liberté de mouvement entre une première position dans laquelle il empêche ou limite le mouvement d'un produit (P) disposé sur la coque (200) correspondante par rapport à ladite coque (200) au moins dans une direction spécifique, et une deuxième position dans laquelle il n'empêche pas ou ne limite pas ledit mouvement dudit produit (P).

2. Machine de scellement de coques selon la revendication 1, dans laquelle le dispositif de transfert (5) comprend une pluralité de dispositifs de retenue (510) reliés à un et même préhenseur de coque (51, 52), lesdits dispositifs de retenue (510) étant reliés les uns aux autres de telle sorte qu'ils sont configurés pour changer de position conjointement et simultanément.

3. Machine de scellement de coques selon les revendications 1 ou 2, comprenant au moins un actionneur (5101) configuré pour provoquer le changement de position des dispositifs de retenue (510), avec ledit actionneur (5101) étant configuré pour déplacer les dispositifs de retenue (510) dans une direction horizontale et transversale par rapport à la direction de production (A), dans une direction verticale, dans une direction horizontale et verticale au moyen d'une rotation par rapport à un axe de rotation (70) s'étendant dans la direction de production (A), ou au moyen d'une rotation par rapport à un axe de rotation vertical (71).

4. Machine de scellement de coques selon la revendication 3, dans laquelle l'actionneur (5101) est configuré pour déplacer les dispositifs de retenue (510) dans une direction horizontale et transversale par rapport à la direction de production (A).

5. Machine de scellement de coques selon la revendication 3, dans laquelle l'actionneur (5101) est configuré pour déplacer verticalement les dispositifs de retenue (510).

6. Machine de scellement de coques selon la revendication 3, dans laquelle l'actionneur (5101) est configuré pour déplacer les dispositifs de retenue (510) par rapport au préhenseur de coque (51, 52) provoquant la rotation de celui-ci par rapport à un axe de rotation (70) s'étendant dans la direction de production (A) ou par rapport à un axe de rotation vertical (71).

7. Machine de scellement de coques selon l'une quelconque des revendications 1 à 6, dans laquelle au moins un des dispositifs de retenue (510) comprend deux butées transversales (5111, 5112) l'une face à l'autre dans la direction de production (A) et séparées l'une de l'autre dans ladite direction de production (A) par une distance supérieure à la longueur du produit (P) disposé sur la coque (200) et inférieure à la longueur de ladite coque (200) dans ladite direction de production (A), les butées transversales (5111, 5112) étant configurées pour empêcher ou limiter le mouvement du produit (P) correspondant dans la direction de production (A) et dans la direction opposée par rapport à ladite direction de production (A).

8. Machine de scellement de coques selon la revendication 7, dans laquelle le dispositif de retenue (510) comprenant deux butées transversales (5111, 5112) comprend en outre une butée longitudinale (5113) s'étendant dans la direction de production (A) et entre lesdites deux butées transversales (5111, 5112), la butée longitudinale (5113) étant configurée pour être disposée, dans la première position du dispositif de retenue (510), entre le produit (P) disposé sur la coque (200) avec laquelle est associé ledit dispositif de retenue (510) et le préhenseur de coque (51,52) auquel est relié ledit dispositif de retenue (510).

9. Machine de scellement de coques selon la revendication 8, dans laquelle la position de la butée longitudinale (5113) entre le produit (P) disposé sur la coque (200) correspondante et le préhenseur de coque (51, 52) auquel est relié ledit dispositif de retenue (510) est ajustable dans une direction horizontale et transversale par rapport à la direction de production (A).

10. Machine de scellement de coques selon l'une quelconque des revendications 7 à 9, dans laquelle la distance dans la direction de production (A) entre les deux butées transversales (5111, 5112) du dispositif de retenue (510) comprenant lesdites butées transversales (5111, 5112) est ajustable.

11. Machine de scellement de coques selon l'une quelconque des revendications 1 à 10, dans laquelle au moins un des dispositifs de retenue (510) comprend une butée supérieure (5114) pour empêcher ou limiter au moins le mouvement vertical du produit (P) correspondant, la butée supérieure (5114) étant configurée pour être disposée au-dessus du produit (P) disposé sur la coque (200) correspondante lorsque ledit dispositif de retenue (510) est dans la première position.

12. Machine de scellement de coques selon la revendication 11, dans laquelle la butée supérieure (5114) est configurée pour être disposée de telle sorte qu'elle entre en contact avec le produit (P) disposé sur la coque (200) correspondante lorsque ledit dispositif de retenue (510) est dans la première position.

13. Machine de scellement de coques selon la revendication 11 ou 12, dans laquelle la distance verticale entre la butée supérieure (5114) du dispositif de retenue (510) et la coque (200) associée avec ledit dispositif de retenue (510) est ajustable.

14. Procédé d'emballage pour une machine de scellement de coques, dans lequel une pluralité de coques (200) disposées dans une unité d'alimentation de coques (2) de la machine (100), distribuées dans une direction de production (A) et avec un produit (P) disposé sur chacune desdites coques (200) sont disposées avec un dispositif de transfert (5) de ladite machine (100); le dispositif de transfert (5) est déplacé dans la direction de production (A) avec lesdites coques (200) maintenues jusqu'à ce que lesdites coques (200) soient introduites dans une station de scellement (1) de la machine (100); une fois que les coques (200) sont disposées dans la station de scellement (1), lesdites coques (200) sont libérées du dispositif de transfert (5); un film de recouvrement est alimenté à la station de scellement (1) par-dessus les coques (200) et leurs produits respectifs (P); et dans ladite station de scellement (1), le film de recouvrement est scellé aux coques (200) disposées et libérées dans ladite station de scellement (1), **caractérisé en ce que** dans l'unité d'alimentation de coques (2), un dispositif de retenue (510) dudit dispositif de transfert (5) associé à chaque coque (200) devant être maintenue par le dispositif de transfert (5) dans l'unité d'alimentation de coques (2) est disposé dans une première position dans laquelle ledit dispositif de retenue (510) empêche ou limite le mouvement du produit (P) disposé sur la coque associée (200) par rapport à ladite coque (200) au moins dans une direction spécifique, le dispositif de transfert (5) est ensuite déplacé conjointement avec les dispositifs de retenue (510) dans le sens de production (A) pour introduire les coques (200) maintenues par ledit dispositif de transfert (5) dans la station de scellement (1), les dispositifs de retenue (510) étant dans la première position, et ensuite, avec lesdits dispositifs de retenue (510) dans la station de scellement (1), lesdits dispositifs de retenue (510) sont disposés dans une deuxième position dans laquelle ils n'empêchent pas ou ne limitent pas le mouvement des produits (P) par rapport aux coques (200) correspondantes, et lesdites coques (200) sont libérées depuis le dispositif de transfert (5) afin d'effectuer ensuite le scellement entre le film de recouvrement et les coques (200).

15. Procédé d'emballage selon la revendication 14, dans lequel une pluralité de dispositifs de retenue (510) sont portés à changer depuis la première position à la deuxième position et vice versa conjointement et simultanément.

16. Procédé d'emballage selon la revendication 14 ou 15, dans lequel chaque dispositif de retenue (510) est disposé dans la première position pour empêcher ou limiter le mouvement du produit (P) correspondant dans au moins une direction horizontale, et/ou pour empêcher ou limiter le mouvement vertical du produit (P) correspondant.
